# EUROPEAN PATENT APPLICATION

(11) **EP 4 691 414 A1**
(43) Date of publication of application: **11.02.2026**
(21) Application number: 24800107.5
(22) Date of filing: 30.04.2024
(51) Int. Cl.: A61C 5/80, A61C 19/06

(54) **DENTAL-TREATMENT INDEX, DENTAL-TREATMENT INDEX FIXING HOLDER, DENTAL-TREATMENT SET, METHOD FOR GENERATING THREE-DIMENSIONAL DATA OF DENTAL-TREATMENT INDEX, AND DATA FOR PREPARING DENTAL-TREATMENT INDEX**

(30) Priority: 01.05.2023 JP 2023075731
(71) Applicant: Amidex, Inc., Tokushima City, Tokushima 770-0041 (JP)
(72) Inventor: WATANABE, Keiichiro, Tokushima-shi, Tokushima 770-8501 (JP); HOSAKA, Keiichi, Tokushima-shi, Tokushima 770-8501 (JP); KAMOI, Kohei, Tokushima-shi, Tokushima 770-8501 (JP); TANAKA, Eiji, Tokushima-shi, Tokushima 770-8501 (JP)
(74) Representative: Papula Oy
(86) International application number: PCT/JP2024/016629
(87) International publication number: WO 2024/228376

(57) **Abstract**

Provided is a dental-treatment index that enables high-quality tooth crown restoration regardless of the skill of a practitioner. A dental-treatment index 10 according to the present invention is composed of a material through which light transmits, and has two fixing outer surfaces 13 and a tooth-shaped hole 14 provided in an internal surface 11a between said two fixing outer surfaces 13. Each of the fixing outer surfaces 13 is provided with a guide part 13a. A dental-treatment index fixing holder 20 is composed of a material through which light transmits, and has two holder lateral surface parts 22 that are coupled to each other. In the two holder lateral surface parts 22, fixing inner surfaces 23 facing each other have guided parts 23a provided thereto.

## Description

### TECHNICAL FIELD

The present invention relates to a dental treatment index, a dental treatment index fixing holder, a dental treatment set, a dental treatment index three-dimensional data generation method, and dental treatment index creation data.

### BACKGROUND ART

In the field of dental treatment, techniques have become widespread in which a resin or composite resin that is cured by light, such as composite resin (hereinafter referred to as a light-curable resin), is used to restore a dental crown damaged by caries, fracture, or the like (for example, see Patent Document 1). In such crown restoration, the light-curable resin in an uncured state is applied to the crown prior to restoration, and the crown is restored by curing the resin while maintaining a predetermined shape.

### Citation List

### Patent Documents

Patent Document 1: Japanese Unexamined Patent Application, Publication No. 2020-83802

### DISCLOSURE OF THE INVENTION

### Problems to be Solved by the Invention

However, such crown restoration is highly dependent on the skill of the practitioner performing the restorative treatment, and variations in the finished state occur depending on the practitioner.

It is an object of the present invention to provide a dental treatment index, a dental treatment index fixing holder, a dental treatment set, a dental treatment index three-dimensional data generation method, and dental treatment index creation data, which enable high-quality crown restoration regardless of the skill of the practitioner.

### Means for Solving the Problems

In order to solve the above problem, a first aspect of the present invention provides a dental treatment index, which is composed of a light-transmissive material, and includes two fixing outer surfaces and a tooth-shaped hole provided in an inner surface between the two fixing outer surfaces. A guide portion is provided on each of the fixing outer surfaces.

The guide portion may be a flat surface.

In a portion where the tooth-shaped hole is provided, a through-hole penetrating the inner surface and an upper surface may be provided.

The through-hole may have an opening area that decreases from the upper surface toward the inner surface.

A contact portion extending outward may be provided from a tip end of the guide portion in a direction from the upper surface toward the inner surface.

The guide portion may be provided on a tip end side in a direction from the upper surface toward the inner surface in the fixing outer surface.

In order to solve the above problem, a second aspect of the present invention provides a dental treatment index fixing holder, which is composed of a light-transmissive material, and includes two holder side portions connected to each other. On opposing fixing inner surfaces of the two holder side portions, counter guide portions may be provided.

The counter guide portion may be a flat surface.

In order to solve the above problem, a third aspect of the present invention provides a dental treatment set, which includes the above-described dental treatment index and the above-described dental treatment index fixing holder. When a distance between upper portions of the fixing inner surfaces other than portions where the counter guide portions are provided in the dental treatment index fixing holder is defined as d4, and a distance between upper portions of the fixing outer surfaces other than portions where the guide portions are provided in the dental treatment index is defined as d3, the relationship is d3 < d4.

When a distance between the two counter guide portions is defined as d2, and a distance between the two guide portions is defined as d1, the relationship may be d2 ≤ d1.

In order to solve the above problem, a fourth aspect of the present invention provides a dental treatment index three-dimensional data generation method, which includes: a pre-restoration tooth shape imaging step of capturing a pre-restoration tooth shape image; a pre-restoration tooth shape three-dimensional data generation step of creating pre-restoration tooth shape three-dimensional data based on the pre-restoration tooth shape image; a target tooth shape three-dimensional data generation step of creating target tooth shape three-dimensional data of a target shape to be formed after restoration, based on the pre-restoration tooth shape three-dimensional data; and a dental treatment index three-dimensional data generation step of creating three-dimensional data of a dental treatment index, which includes two fixing outer surfaces, guide portions provided on the respective fixing outer surfaces, and a tooth-shaped hole corresponding to the target tooth shape formed in an inner surface between the two fixing outer surfaces, based on the target tooth shape three-dimensional data.

In order to solve the above problem, a fifth aspect of the present invention provides dental treatment index creation data, which is input to a 3D printer to create a dental treatment index including two fixing outer surfaces, guide portions provided on the respective fixing outer surfaces, and a tooth-shaped hole corresponding to a target tooth shape of a target shape to be formed after restoration, the tooth-shaped hole being formed in an inner surface between the two fixing outer surfaces.

### Effects of the Invention

According to the present invention, a dental treatment index, a dental treatment index fixing holder, a dental treatment set, a dental treatment index three-dimensional data generation method, and dental treatment index creation data, which enable high-quality crown restoration regardless of the skill of the practitioner, can be provided.

### BRIEF DESCRIPTION OF THE DRAWINGS

FIG. 1 is a diagram illustrating a method of using a dental treatment set 1;
FIG. 2 is a diagram illustrating an example of a pre-restoration dental crown 31A;
FIG. 3 is a diagram illustrating a restored dental crown 31B, and shows a state in which a cavity 32 is filled with a light-curable resin for restoration;
FIG. 4 is a perspective view of a dental treatment index 10;
FIG. 5 is a diagram illustrating the dental treatment index 10 and a dental treatment index fixing holder 20;
FIG. 6 is a perspective view of the dental treatment index fixing holder 20;
FIG. 7 is a flowchart illustrating a manufacturing process of the dental treatment index 10;
FIG. 8 is a flowchart illustrating a dental treatment process in a first embodiment;
FIG. 9 is a flowchart illustrating a dental treatment process in a second embodiment;
FIG. 10 is a diagram illustrating a method of manufacturing a dental treatment index 210 in a third embodiment;
FIG. 11 is a flowchart illustrating a manufacturing process of the dental treatment index 210 in the third embodiment;
FIG. 12 is a diagram illustrating a dental treatment index 310 according to a fourth embodiment;
FIG. 13 is a diagram illustrating an index fixing holder 320 according to the fourth embodiment;
FIG. 14 is a diagram illustrating pre-restoration dentition 330A to be restored using the dental treatment index 310 and the index fixing holder 320 in the fourth embodiment;
FIG. 15 is a diagram illustrating restored dentition 330B restored using the dental treatment index 310 and the index fixing holder 320 in the fourth embodiment;
FIG. 16 is a diagram illustrating a method of forming an intermediate target tooth shape using a first dental treatment index 10A in a fifth embodiment; and
FIG. 17 is a diagram illustrating a method of forming a final target tooth shape using a second dental treatment index 10B in the fifth embodiment.

### PREFERRED MODE FOR CARRYING OUT THE INVENTION

### (First Embodiment)

Hereinafter, a dental treatment index 10, a dental treatment index fixing holder 20, and a dental treatment set 1 according to a first embodiment of the present invention will be described. The dental treatment set 1 is used to restore a dental crown 31 to a target tooth shape, and the dental treatment set 1 is configured of the dental treatment index 10 and the dental treatment index fixing holder 20.

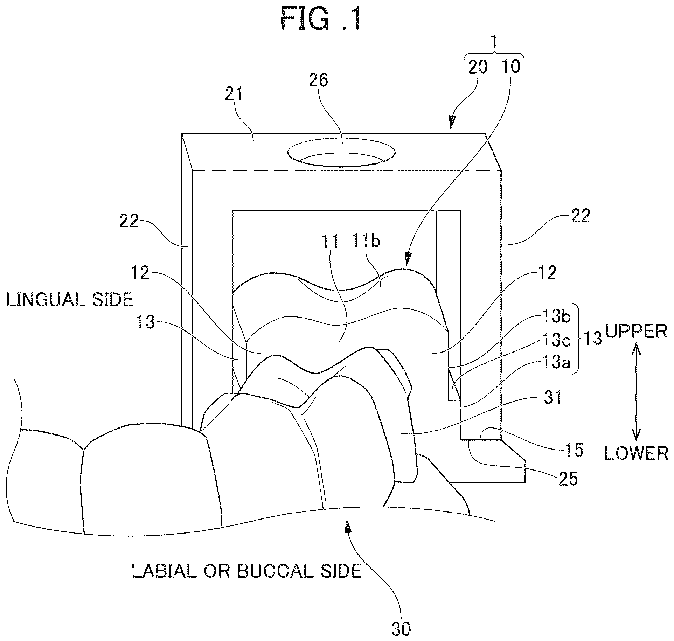

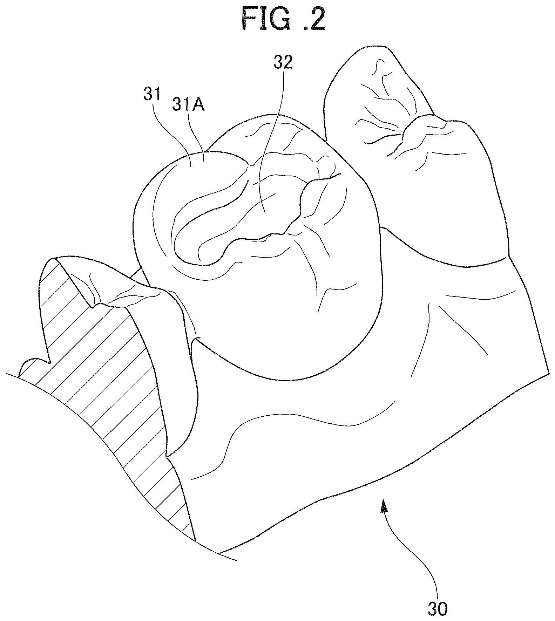

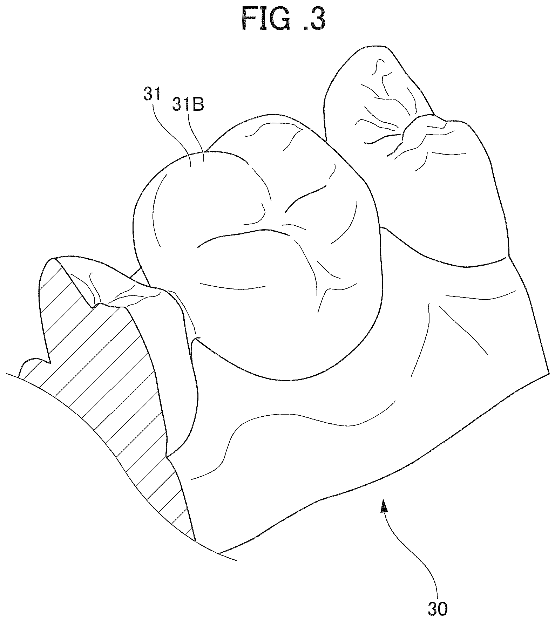

FIG. 1 is a diagram illustrating a method of using the dental treatment set 1. The dental treatment set 1 is used by placing the dental treatment index 10 over a pre-restoration dental crown 31A in an actual dentition 30 and fixing the dental treatment index 10 with the dental treatment index fixing holder 20. FIG. 2 is a diagram illustrating an example of the pre-restoration dental crown 31A. In the pre-restoration dental crown 31A, a cavity 32 (a hole formed by cutting after removal of decayed tooth due to caries) is opened. FIG. 3 is a diagram illustrating the restored dental crown 31B, and shows a state in which the cavity 32 is filled with a light-curable resin for restoration.

In dental treatment using the dental treatment set 1 in the first embodiment, first, the dental treatment index 10 is placed over the pre-restoration dental crown 31A. Then, the dental treatment index 10 is pressed from the outside by the dental treatment index fixing holder 20, and a light-curable resin, which is a resin or composite resin that hardens when irradiated with light (hereinafter referred to as a light-curable resin), is filled into a gap formed between the dental crown 31A and the dental treatment index 10. In this state, light is irradiated from outside the dental treatment index 10 and the dental treatment index fixing holder 20 to cure the light-curable resin arranged in the gap, thereby restoring the dental crown 31A to the target tooth shape.

The pre-restoration dental crown is denoted by 31A, and the restored dental crown is denoted by 31B. However, when distinction is unnecessary, both are collectively referred to as the dental crown 31. In the first embodiment, the dental crown 31 to be restored is, as an example, a molar tooth. However, the dental crown restored by the present invention is not limited to molars. In the present invention, restoration of the dental crown is not limited to filling a cavity, but also includes adjusting the shape of the dental crown, enlarging a dental crown smaller than a predetermined size, or newly forming a dental crown in a location where no dental crown originally exists.

### (Dental Treatment Index 10)

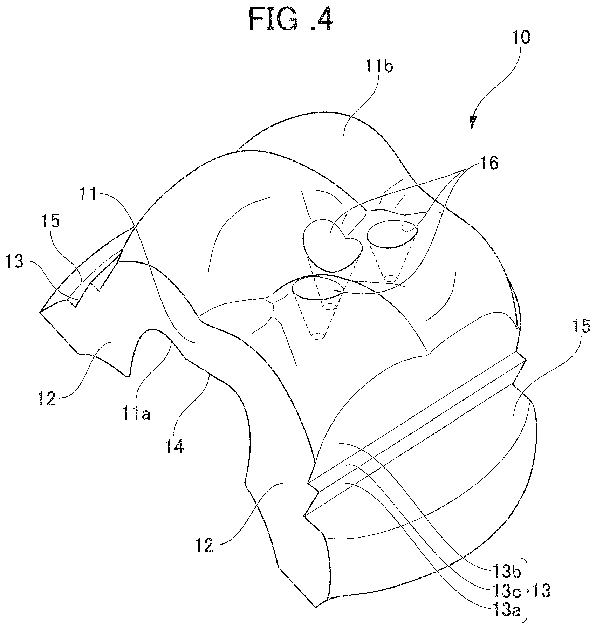

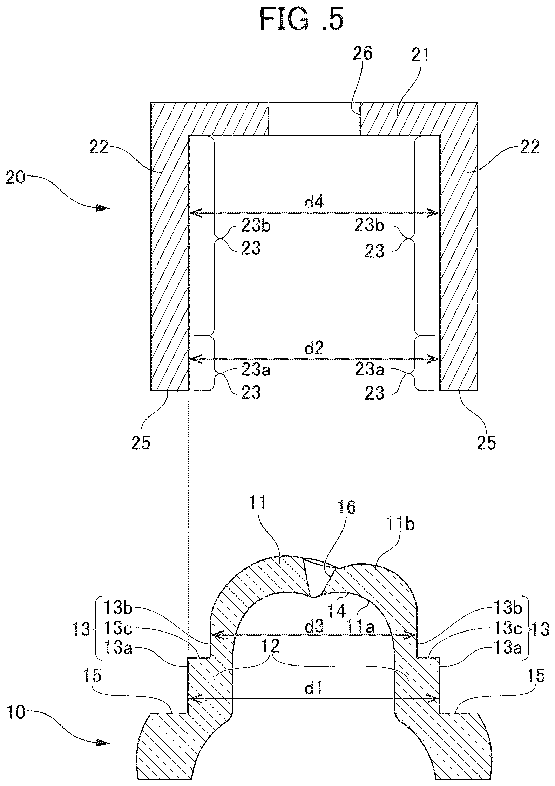

FIG. 4 is a perspective view of a dental treatment index 10. The dental treatment index 10 is manufactured from a light-transmissive material (hereinafter referred to as light-transmissive), such as a soft-type material including soft resin or silicone. FIG. 5 is a diagram illustrating the dental treatment index 10 and a dental treatment index fixing holder 20, in which the dental treatment index fixing holder 20 is shown in the upper part of the diagram and the dental treatment index 10 is shown in the lower part of the diagram.

The dental treatment index 10 includes two index side portions 12 that cover a lingual side surface and a labial or buccal side surface of a dental crown 31, respectively, and an index connecting portion 11 that connects the two index side portions 12 and covers an upper side of the dental crown 31.

### (Tooth-Shaped Hole 14)

On an inner surface 11a of the index connecting portion 11 of the dental treatment index 10, a tooth-shaped hole 14 corresponding to a target tooth shape is provided. In the present specification, regardless of whether an upper dentition or a lower dentition is restored, as illustrated in FIG. 1, the dental crown 31 side is referred to as "upper", and the dental root side is referred to as "lower". A side of the index connecting portion 11 where the tooth-shaped hole 14 is provided is referred to as the inner surface 11a, and the opposite side is referred to as the upper surface 11b. The lingual side is a side where the tongue is located in an actual dentition 30, and the labial or buccal side is a side opposite to the lingual side, where the lip or cheek is located in the actual dentition 30. FIG. 1 illustrates which side corresponds to the lingual side and which side corresponds to the labial or buccal side in the present embodiment. Furthermore, the target tooth shape is, without being limited thereto, a shape of the dental crown 31 or dentition 30 to be finally formed in the present embodiment. The shape of the restored dental crown 31B illustrated in FIG. 3 is an example of the target tooth shape in the present embodiment.

### (Through-Hole 16)

As illustrated in FIG. 4, a through-hole 16 penetrating the inner surface 11a and the upper surface 11b is provided in the index connecting portion 11 of the dental treatment index 10. In the embodiment, three through-holes 16 are provided. The number of through-holes 16 is not limited to three, but it is preferable that a plurality of through-holes 16 be provided.

As illustrated by the dotted line in FIG. 4, the through-hole 16 has an opening area that decreases from the upper surface 11b toward the inner surface 11a. A cross-section of the through-hole 16 in a direction (hereinafter referred to as a horizontal direction) orthogonal to a vertical direction is substantially circular. The shape of the through-hole 16 is not limited thereto, and any through-hole may be employed as long as the hole penetrates therethrough, such as a cylindrical hole in which the opening area does not decrease from the upper surface 11b toward the inner surface 11a. However, it is preferable that the through-hole 16 have a shape in which the opening decreases from the upper surface 11b toward the inner surface 11a, as in the embodiment, and it is more preferable that the shape be substantially truncated cone-shaped.

### (Guide Portion 13a)

Guide portions 13a are provided on fixing outer surfaces 13 facing opposite directions toward the lingual side or buccal side, of two index side portions 12. The guide portion 13a is provided on a lower side, that is, a dental root side, of the fixing outer surface 13 of the index side portion 12, rather than over the entire fixing outer surface 13. The guide portion 13a is a portion protruding toward the lingual side or buccal side compared with a fixing outer surface upper portion 13b, which is a portion of the index side portion 12 other than the portion where the guide portion 13a is provided. Both the fixing outer surface upper portion 13b and the guide portion 13a are planes extending in a vertical direction, and a stepped portion 13c is provided therebetween. In the embodiment, the fixing outer surface upper portion 13b and the guide portion 13a are substantially parallel to each other, with the stepped portion 13c provided therebetween. However, this is not limiting. For example, without providing the stepped portion 13c, the fixing outer surface upper portion 13b may be formed as an inclined surface whose lower end is connected to an upper end of the guide portion 13a. In other words, a portion above the guide portion 13a of the dental treatment index 10 may be tapered.

As illustrated in the lower diagram of FIG. 5, a distance between the two fixing outer surface upper portions 13b is substantially constant and is defined as d3. A distance between the two guide portions 13a is substantially constant and is defined as d1. The guide portion 13a is a sliding surface that guides a counter guide portion 23a of a dental treatment index fixing holder 20 to slide, which will be described later. The relationship between the distance d3 between the two fixing outer surface upper portions 13b and the distance d1 between the two guide portions 13a is d3 < d1.

However, the guide portion and the counter guide portion are not limited to flat surfaces as in the embodiment. As long as one is slidable along the other, for example, one may be a convex ridge and the other may be a concave groove that engages with the convex ridge to slide.

### (Contact Portion 15)

Contact portions 15 are provided extending outward from lower ends of the two guide portions 13a, respectively. The contact portion 15 comes into contact with counter contact portions 25 provided at lower ends of two holder side portions 22 of the dental treatment index fixing holder 20, which will be described later. The lingual-side contact portion 15 is a plane (step portion) extending from the lower end of the lingual-side guide portion 13a, substantially orthogonally to the guide portion 13a toward the lingual side. The labial- or buccal-side contact portion 15 is a plane (step portion) extending from the lower end of the labial- or buccal-side guide portion 13a substantially orthogonally to the guide portion 13a toward the labial side or buccal side. However, the contact portion 15 is not limited to a plane (step portion) as long as the contact portion 15 comes into contact with and is pressed by the counter contact portion 25 provided at the lower end of the holder side portion 22.

### (Dental Treatment Index Fixing Holder 20)

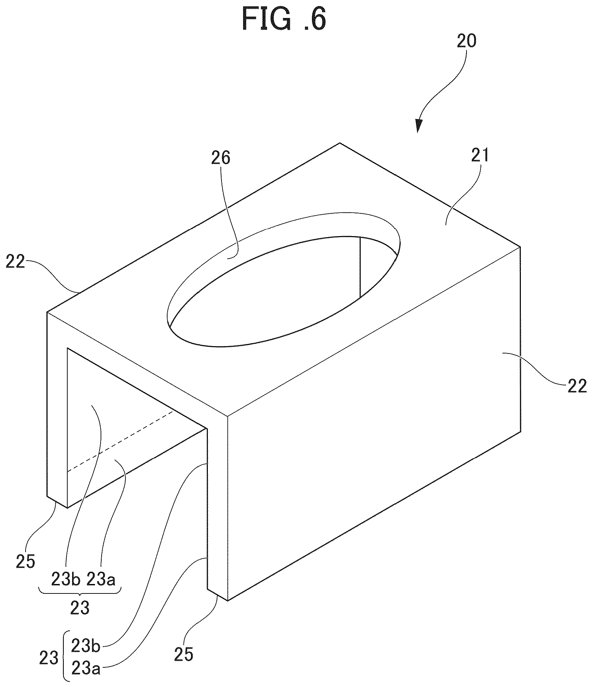

FIG. 6 is a perspective view of a dental treatment index fixing holder 20. The dental treatment index fixing holder 20 is manufactured from a light-transmissive resin. In the embodiment, it is preferable that the dental treatment index fixing holder 20 be manufactured from a hard-type light-transmissive resin having higher rigidity than the dental treatment index 10, so that the dental treatment index fixing holder 20 does not deform when holding the dental treatment index 10. However, the material is not limited to such a resin, and the dental treatment index fixing holder 20 may be manufactured from a metal material, such as a mesh or a plurality of holes formed to allow transmission of light.

The dental treatment index fixing holder 20 has a U-shaped cross section, including two holder side portions 22 facing each other and a holder connecting portion 21 connecting upper portions of the two holder side portions 22. An opening 26 is provided in the holder connecting portion 21. In the embodiment, the opening 26 is substantially elliptical.

### (Counter Guide Portion 23a)

Counter guide portions 23a, guided by the guide portions 13a of the dental treatment index 10 described above, are formed on fixing inner surfaces 23 of the two holder side portions 22 of the dental treatment index fixing holder 20, respectively. In the present specification, the fixing inner surface 23 of the dental treatment index fixing holder 20 refers to a surface on a side facing the dental treatment index 10.

As illustrated in the upper diagram of FIG. 5, the fixing inner surfaces 23 of the two holder side portions 22 are planes parallel to each other. When portions of the fixing inner surfaces 23 other than portions where the counter guide portions 23a are provided are defined as fixing inner surface upper portions 23b, a distance between the two fixing inner surface upper portions 23b is substantially constant and is defined as d4. A distance between the two counter guide portions 23a is substantially constant and is defined as d2. In the embodiment, d4 = d2. That is, the fixing inner surface upper portion 23b, which is a portion of the fixing inner surface 23 other than the portion where the counter guide portion 23a is provided, and the counter guide portion 23a are on the same plane. However, this is not limiting. For example, the counter guide portion may be projected inward so that d4 < d2, and the projected counter guide portion comes into contact with the guide portion of the dental treatment index.

The distance d2 between the two counter guide portions 23a is equal to or less than the distance d1 between the two guide portions 13a of the dental treatment index 10. That is, the relationship is d2 ≤ d1. The distance d3 between the two fixing outer surface upper portions 13b and the distance d2 between the two counter guide portions 23a are in the relationship of d3 < d2. That is, d3 < d2 ≤ d1. Furthermore, d3 < d4. However, the relationship between d2 and d1 is preferably d2 ≤ d1, but not limited thereto. For example, d2 may be slightly larger than d1, for instance, by about 0.1 mm to 0.2 mm.

### (Counter Contact Portion 25)

Bottom surfaces of lower ends of the two holder side portions 22 serve as counter contact portions 25 that come into contact with the contact portions 15 described above.

### (Manufacturing of Dental Treatment Index 10)

In the embodiment, the dental treatment index 10 is manufactured, as an example, by a 3D printer using dental treatment index three-dimensional data generated with the dental treatment index three-dimensional data generation method of the present invention.

### (Dental Treatment Index Three-Dimensional Data Generation Method)

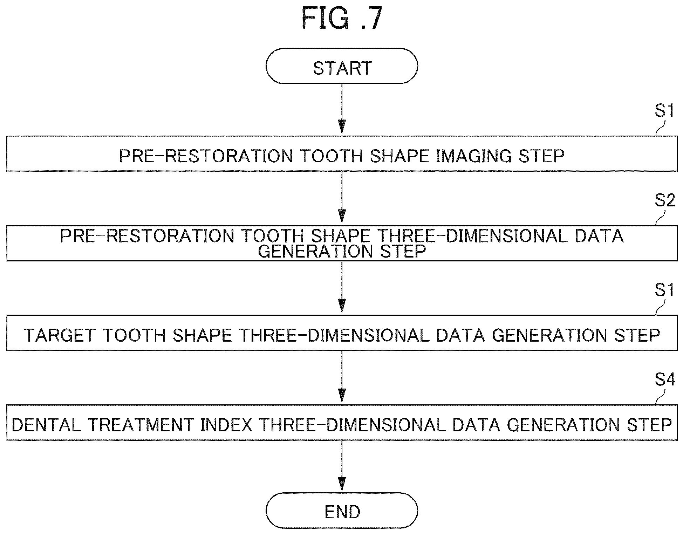

FIG. 7 is a flowchart illustrating a dental treatment index three-dimensional data generation method. The dental treatment index three-dimensional data generation method includes a pre-restoration tooth shape imaging step S1, a pre-restoration tooth shape three-dimensional data generation step S2, a target tooth shape three-dimensional data generation step S3, and a dental treatment index three-dimensional data generation step S4.

### (Pre-Restoration Tooth Shape Imaging Step S1)

First, a pre-restoration tooth shape of the dentition 30 of a patient, including the pre-restoration dental crown 31A, is captured in a plurality of images from different positions and different angles.

### (Pre-Restoration Tooth Shape Three-Dimensional Data Generation Step S2)

Based on the plurality of pre-restoration tooth shapes captured in the pre-restoration tooth shape imaging step S1, pre-restoration tooth shape three-dimensional data, which is three-dimensional data of the pre-restoration tooth shape, is generated.

### (Target Tooth Shape Three-Dimensional Data Generation Step S3)

Based on the pre-restoration dentition three-dimensional data, target tooth shape three-dimensional data of a target tooth shape to be formed after restoration is generated.

### (Dental Treatment Index Three-Dimensional Data Generation Step S4)

Based on the target tooth shape three-dimensional data, dental treatment index three-dimensional data of the dental treatment index 10 is generated, in which the tooth-shaped hole 14 corresponding to the target tooth shape is formed on the inner surface 11a, and the guide portions 13a are provided on the fixing outer surfaces 13.

### (Printing of Dental Treatment Index)

Based on the dental treatment index three-dimensional data, the dental treatment index 10 is printed with a 3D printer using, for example, a light-transmissive soft resin (3D printable resin) as a material. Through the above steps, the dental treatment index 10 is manufactured.

### (Manufacturing of Dental Treatment Index Fixing Holder 20)

The dental treatment index fixing holder 20 is manufactured, for example, with a 3D printer using a light-transmissive hard-type resin. When the dental treatment index fixing holder 20 is used for different dental treatment indexes 10, the same dental treatment index fixing holder 20 can be shared if distances between the guide portions 13a are equal. The dental treatment index fixing holder 20 may also be manufactured from metal instead of a light-transmissive resin. In such a case, it is preferable that the holder be formed in a mesh shape or provided with a plurality of holes so as to allow light to pass therethrough.

### (Dental Treatment Process)

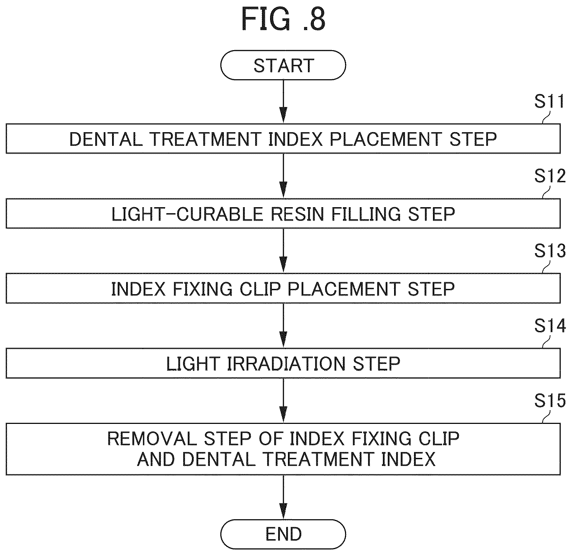

Next, an example of the dental treatment process of treating the dental crown 31 using the dental treatment set 1 including the dental treatment index 10 and the dental treatment index fixing holder 20 will be described. FIG. 8 is a flowchart illustrating the dental treatment process. The dental treatment process includes a dental treatment index placement step S11, a light-curable resin filling step S12, an index fixing holder placement step S13, a light irradiation step S14, and a removal step S15 of the index fixing holder and the dental treatment index.

### (Dental Treatment Index Placement Step S11)

First, the dental treatment index 10 is placed over a pre-restoration dental crown 31A. A tooth-shaped hole 14 corresponding to the target tooth shape is provided on the inner surface 11a of the dental treatment index 10. Accordingly, a gap is formed between the pre-restoration dental crown 31A and the inner surface 11a of the tooth-shaped hole 14 of the dental treatment index 10.

### (Light-Curable Resin Filling Step S12)

Uncured light-curable resin is injected from the through-hole 16 into the gap between the pre-restoration dental crown 31A and the inner surface 11a of the tooth-shaped hole 14 of the dental treatment index 10, thereby filling the gap with the uncured light-curable resin.

The light-curable resin is, for example, composite resin. Composite resin is a composite resin material for dental crown restoration, in which ceramic particles are dispersed at a predetermined ratio in synthetic resin.

Here, since the through-hole 16 has a shape in which the opening becomes larger from the inner surface 11a toward the outer surface, the light-curable resin can be easily injected from the outer surface side toward the inner surface 11a side.

At this time, excess light-curable resin among the light-curable resin filled into the gap between the dental crown 31A and the inner surface 11a of the tooth-shaped hole 14 is discharged to the outside through another through-hole 16 different from the through-hole 16 into which the light-curable resin is injected, or from a lower side of the dental treatment index 10, because the plurality of through-holes 16 are provided. In this case as well, since the through-hole 16 has a shape in which the opening becomes larger from the inner surface 11a toward the outer surface, resistance during discharge is reduced, and the light-curable resin can be easily discharged from the inner surface 11a side toward the outer surface side.

### (Index Fixing Holder Placement Step S13)

Next, in a state where the index side portions 12 of the dental treatment index 10 are interposed between the holder side portions 22 of the dental treatment index fixing holder 20, the dental treatment index fixing holder 20 is slid downward.

At this time, as illustrated in FIG. 5, in the present embodiment, the relationship among the distance d1 between the two guide portions 13a of the dental treatment index 10, the distance d3 between the two fixing outer surface upper portions 13b where the guide portions 13a are not provided, the distance d2 between the two counter guide portions 23a of the dental treatment index fixing holder 20, and the distance d4 between the two fixing inner surface upper portions 23b is d3 < d2 ≤ d1, and d3 < d4.

Therefore, until the dental treatment index fixing holder 20 descends and the counter guide portions 23a come into contact with the guide portions 13a, there is a gap of d2 - d3 between the fixing inner surface 23 and the fixing outer surface 13, so that the fixing inner surface 23 does not come into contact with the fixing outer surface 13.

Since d2 ≤ d1, when the dental treatment index fixing holder 20 descends and the counter guide portions 23a come into contact with the guide portions 13a, the guide portions 13a are pressed from the sides by the two counter guide portions 23a having high rigidity. Accordingly, the distance between the two guide portions 13a is maintained substantially equal to the distance d2 between the two counter guide portions 23a. As a result, the possibility that the shape of the light-curable resin inside the dental treatment index 10 becomes distorted is reduced. Even when d2 is slightly larger than d1, the expansion of the guide portions 13a can be pressed from the sides by the two counter guide portions 23a.

Furthermore, the counter contact portions 25, which are bottom surfaces of the holder side portions 22 of the dental treatment index fixing holder 20, come into contact with the contact portions 15 provided at lower ends of the index side portions 12 of the dental treatment index 10, so that the contact portions 15 are pressed downward by the counter contact portions 25. Accordingly, the dental treatment index 10 is also pressed in the vertical direction and becomes less likely to deform in the vertical direction. Finally, in the fixing outer surface 13, only the portions of the guide portions 13a are pressed from the sides. Therefore, compared with a case where the entire fixing outer surface 13 is pressed from the sides, unevenness in pressing force is less likely to occur.

When the dental treatment index 10 is fixed by the dental treatment index fixing holder 20, further excess light-curable resin that has not been discharged during filling among the light-curable resin filled into the gap between the dental crown 31A and the inner surface 11a of the tooth-shaped hole 14 is discharged to the outside through the through-holes 16 or from the lower side of the dental treatment index 10.

If, unlike in the embodiment, there is no gap of d2 - d3 between the fixing inner surface 23 and the fixing outer surface 13, the fixing inner surface 23 comes into contact with the fixing outer surface 13 and presses the fixing outer surface 13 from the initial stage when the dental treatment index fixing holder 20 begins descending. In such a case, the pressing force of the fixing inner surface 23 on the fixing outer surface 13 changes during the descent of the dental treatment index fixing holder 20, and the shape of the light-curable resin inside the dental treatment index 10 may become distorted. However, in the present embodiment, such distortion is reduced.

### (Light Irradiation Step S14)

Next, light is irradiated to the light-curable resin filled into a gap formed between the dental crown 31A and the dental treatment index 10, from outside the dental treatment index fixing holder 20.

At this time, since the dental treatment index fixing holder 20 and the dental treatment index 10 are capable of transmitting light, light is irradiated to the resin or the like arranged in the gap between the dental treatment index 10 and the dental crown 31, and the resin or the like is cured.

In this case, since the dental treatment index fixing holder 20 is provided with the opening 26, when light is irradiated from the opening 26, the light more easily reaches the light-curable resin.

### (Removal Step S15 of Dental Treatment Index Fixing Holder 20 and Dental Treatment Index 10)

The dental treatment index fixing holder 20 is removed from the dental treatment index 10. Next, the dental treatment index 10 is removed from the dental crown 31. At this time, since the dental treatment index 10 is manufactured from a soft-type material, removal is easy and the restored dental crown 31B is less likely to be damaged.

Through the above steps, the dental crown 31B is restored to the target tooth shape.

### (Second Embodiment)

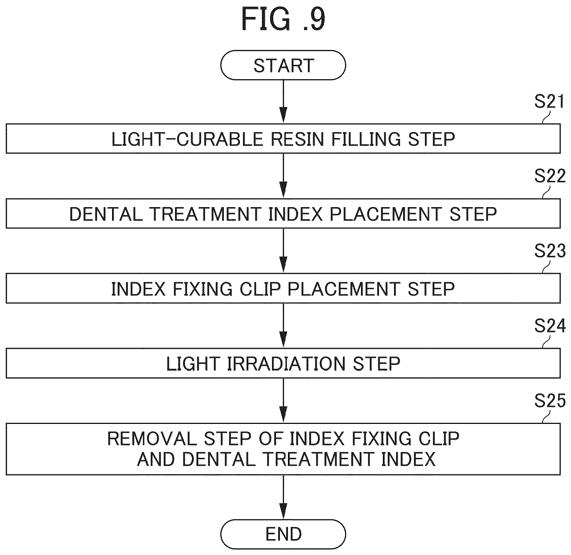

In the first embodiment, the sequence was the dental treatment index placement step S11 and the light-curable resin filling step S12, but the sequence is not limited thereto. FIG. 9 is a flowchart illustrating a dental treatment process in a second embodiment. In the second embodiment, the light-curable resin filling step S21 precedes the dental treatment index placement step S22, which is different from the first embodiment. Other steps such as the index fixing holder placement step S23, the light irradiation step S24, and the removal step S25 of the dental treatment index fixing holder 20 and the dental treatment index, as well as the structures and manufacturing methods of the dental treatment index 10 and the dental treatment index fixing holder 20, are the same as those of the first embodiment, and therefore description thereof is omitted.

### (Light-Curable Resin Filling Step S21)

First, before the dental treatment index 10 is placed over a pre-restoration dental crown 31A, light-curable resin is arranged on the inner surface 11a of the tooth-shaped hole 14, in which the light-curable resin has a volume preferably 1.1 to 1.5 times, more preferably 1.2 to 1.3 times, the restoration volume obtained by subtracting the volume of the pre-restoration dental crown 31A from the volume of a target restored dental crown 31B.

### (Dental Treatment Index Placement Step S22)

Next, the dental treatment index 10 is placed over the pre-restoration dental crown 31A. Here, since the volume of the light-curable resin arranged on the inner surface 11a of the tooth-shaped hole 14 is 1.1 times or more of the restoration volume, the possibility that the shape of the restored dental crown 31A becomes smaller than the target tooth shape or that bubbles occur in a restored portion of the dental crown 31A is low.

Excess light-curable resin is discharged from below the dental treatment index 10 or through the through-holes 16. At this time, since the volume of the light-curable resin arranged on the inner surface 11a of the tooth-shaped hole 14 is 1.5 times or less of the restoration volume, the light-curable resin does not adhere to adjacent other teeth, or even if the light-curable resin adheres, the amount is small. Therefore, there is no need, or only a small need, to later remove the light-curable resin adhered to the other teeth.

In the second embodiment, since the light-curable resin is injected from the inner surface 11a side of the tooth-shaped hole 14, the through-hole 16 need not be provided. Even when the through-hole 16 is not provided, excess light-curable resin can be discharged from below the dental treatment index 10. However, when the through-hole 16 is provided, even after the dental treatment index 10 is placed over the pre-restoration dental crown 31A, it is possible to replenish the light-curable resin, and it is also possible to discharge excess light-curable resin through the through-hole 16.

According to the first and second embodiments described above, the following effects can be achieved. When a dental treatment index fixing holder 20, such as in the embodiments, is not used, it is necessary for the practitioner to hold the dental treatment index while irradiating light to the light-curable resin. Here, when the dental treatment index is manufactured from a soft-type material as in the embodiments, the shape of the light-curable resin arranged in the gap varies depending on the holding force applied to the dental treatment index. Specifically, when the holding force is too weak, the light-curable resin becomes thicker than the desired thickness, and when the holding force is too strong, the light-curable resin becomes thinner than the desired thickness. It is difficult to maintain the holding force uniformly for a certain period of time, and the holding force may change. As a result, the shape of the light-curable resin may be deformed from the target tooth shape. That is, the degree of completion of the restored dental crown greatly depends on the skill and proficiency of the practitioner.

However, when the dental treatment index fixing holder 20 of the embodiments is used, the outer periphery of the dental treatment index 10 can be held in a constant shape regardless of the practitioner. Accordingly, the light-curable resin arranged in the gap between the inner surface 11a of the tooth-shaped hole 14 of the dental treatment index 10 and the dental crown 31A can also be held in the target tooth shape. Therefore, high-quality dental restoration can be performed without depending on the proficiency or skill of the practitioner.

Furthermore, when light is irradiated in a state where the dental treatment index is held by the practitioner, the portion being held by fingers is not irradiated with light. Therefore, in order to irradiate light evenly, the held portion must be moved. This movement is troublesome, and during replacement, the light-curable resin arranged in the gap may be deformed.

However, when the dental treatment index fixing holder 20 and the dental treatment index 10 of the embodiments are used, it is not necessary to replace the holding of the dental treatment index 10. Accordingly, replacement work is unnecessary, and the possibility of deformation is reduced.

In the embodiments, the dental treatment index 10 is manufactured from a soft-type material. Therefore, when placed over the pre-restoration dentition 30, the possibility of generating unnecessary gaps other than intended gaps between the dental treatment index and the dentition 30 is low. An undercut is hardly required. Furthermore, when removing the dental treatment index from the restored dental crown 31B, the possibility that the restored dental crown 31B is damaged is reduced. In addition, since removal is easy, the degree of freedom of restoration forms is increased.

### (Third Embodiment)

Next, a third embodiment of the present invention will be described. In the manufacturing method of the dental treatment index 10 of the first embodiment, the dental treatment index 10 is manufactured with a 3D printer using a light-transmissive soft resin as a material. In the third embodiment, however, a dental treatment index 210 is manufactured without using a 3D printer, for example, by using a light-transmissive silicone resin.

### (Manufacturing of Dental Treatment Index 210)

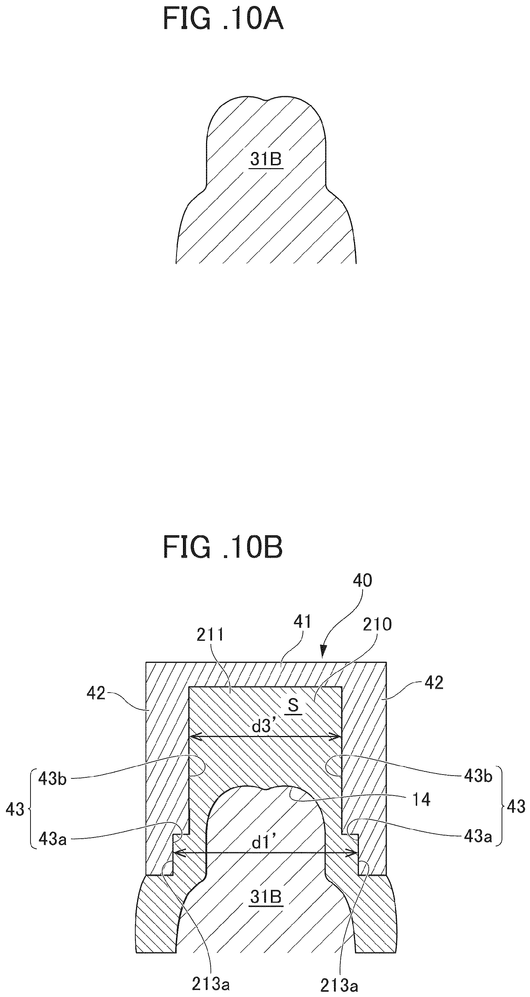

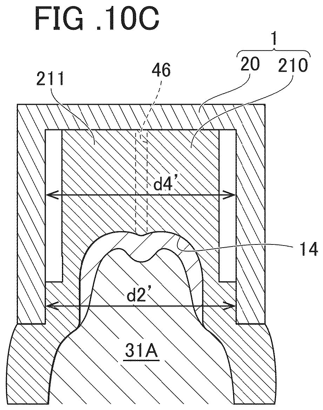

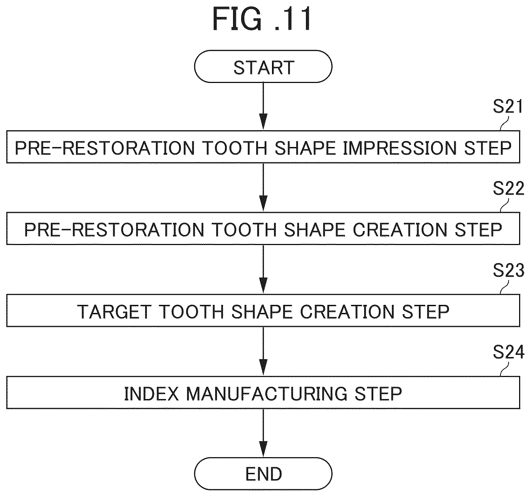

Hereinafter, a method of manufacturing the dental treatment index 210 of the third embodiment will be described. FIG. 10 is a diagram illustrating a method of manufacturing the dental treatment index 210 of the third embodiment, and FIG. 11 is a flowchart illustrating a manufacturing process of the dental treatment index 210 of the third embodiment. Description of portions similar to those in the first embodiment will be omitted.

The manufacturing process of the dental treatment index 210 of the third embodiment includes a pre-restoration tooth shape impression step S31, a pre-restoration tooth shape creation step S32, a target tooth shape creation step S33, and an index manufacturing step S34. FIG. 10(a) illustrates a restored dental crown 31B created through these steps.

### (Pre-Restoration Tooth Shape Impression Step S31)

The pre-restoration tooth shape impression step S31 performs an impression of the pre-restoration dental crown 31A.

### (Pre-Restoration Tooth Shape Creation Step S32)

The pre-restoration tooth shape creation step S32 creates a pre-restoration dental crown 31A based on a mold formed in the pre-restoration tooth shape impression step S31.

### (Target Tooth Shape Creation Step S33)

The target tooth shape creation step S33 creates a restored dental crown 31B based on the created pre-restoration dental crown 31A.

However, the method is not limited thereto. Similarly to the first embodiment, after undergoing the pre-restoration tooth shape imaging step S1, the pre-restoration tooth shape three-dimensional data generation step S2, and the target tooth shape three-dimensional data generation step S3, the restored dental crown 31B may also be created using a 3D printer or the like.

### (Index Manufacturing Step S34)

In the index manufacturing step S34, silicone resin S is arranged between a dentition 30 of a patient, including the created restored dental crown 31B and a pre-manufactured impression tray 40 as illustrated in FIG. 10(b). The silicone resin S is cured to create a dental treatment index 210.

The impression tray 40 is manufactured from a light-transmissive resin similar to the dental treatment index fixing holder 20. It is preferable that the impression tray 40 be manufactured from a light-transmissive resin having higher rigidity than the cured silicone resin dental treatment index 210, so that the impression tray 40 does not deform when holding the cured silicone resin dental treatment index 210. However, the impression tray 40 is not limited to such a resin, and may also be manufactured from a metal material formed in a mesh shape or with a plurality of holes so as to allow light transmission.

The impression tray 40 has a U-shaped cross section, including two tray side portions 42 facing each other and a tray connecting portion 41 connecting upper portions of the two tray side portions 42.

### (Counter Guide Portion 23a)

Tray recesses 43a are provided on the fixing inner surfaces 43 of the two tray side portions 42 of the impression tray 40, which face each other. The tray recesses 43a form guide portions 213a of the dental treatment index 210. The tray recess 43a is provided on a lower side, rather than over the entire fixing inner surface 43. The fixing inner surface 43 is a recessed portion compared with a fixing inner surface upper portion 43b, which is a portion of the tray side portion 42 other than the portion where the tray recess 43a is provided.

A distance between the two tray recesses 43a facing each other is a constant distance d1'. A distance between the two fixing inner surface upper portions 43b is substantially constant and is defined as d3', and the relationship is d3' < d1'. The silicone resin S is arranged between the impression tray 40, and after the silicone resin S is cured, the impression tray 40 is removed from the cured silicone resin S. A dental treatment index 210 similar to that of the first embodiment is formed by providing a through-hole 46 penetrating an inner surface and an outer surface in an index connecting portion 211 of the dental treatment index 210. However, the through-hole 46 need not necessarily be provided.

The outer surface of the index connecting portion 211 of the dental treatment index 210 is a flat surface as illustrated. However, the outer surface may also have an uneven shape, similar to the first embodiment.

### (Dental Treatment Method)

As illustrated in FIG. 10(c), the dental treatment index fixing holder 20 used together with the dental treatment index 210 is the same as in the first embodiment. Therefore, a dental treatment process of treating the dental crown 31 using the dental treatment set 1 including the dental treatment index 210 and the dental treatment index fixing holder 20 is also the same as in the first embodiment.

### (Fourth Embodiment)

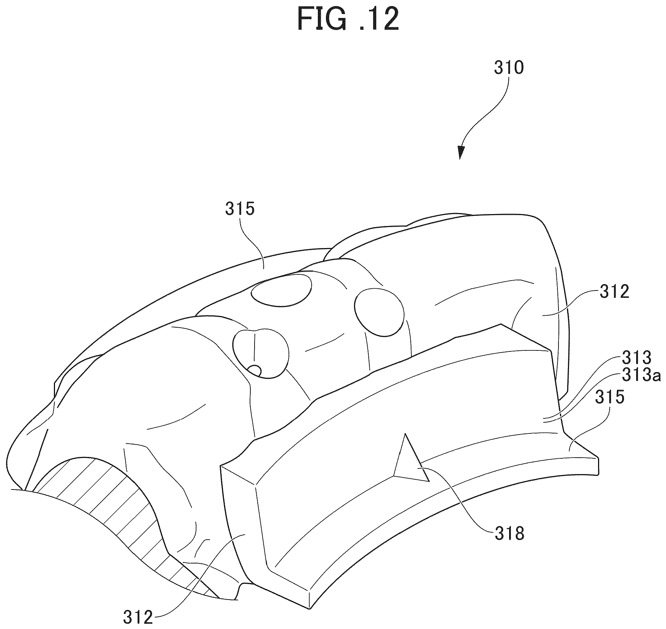

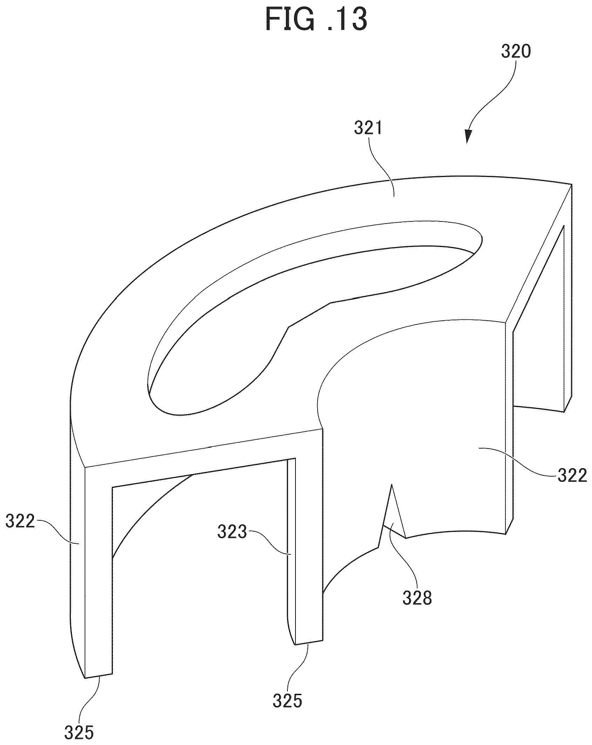

FIG. 12 is a diagram illustrating a dental treatment index 310 according to a fourth embodiment. FIG. 13 is a diagram illustrating an index fixing holder 320 according to the fourth embodiment. A difference between the dental treatment index 310 and the index fixing holder 320 of the fourth embodiment and those of the first embodiment is that a guide portion 313a of the dental treatment index 310 and a counter guide portion 323 of the index fixing holder 320 are curved.

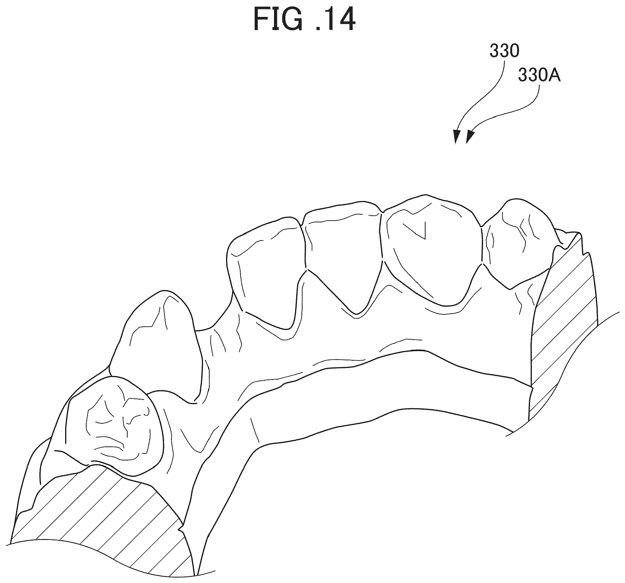

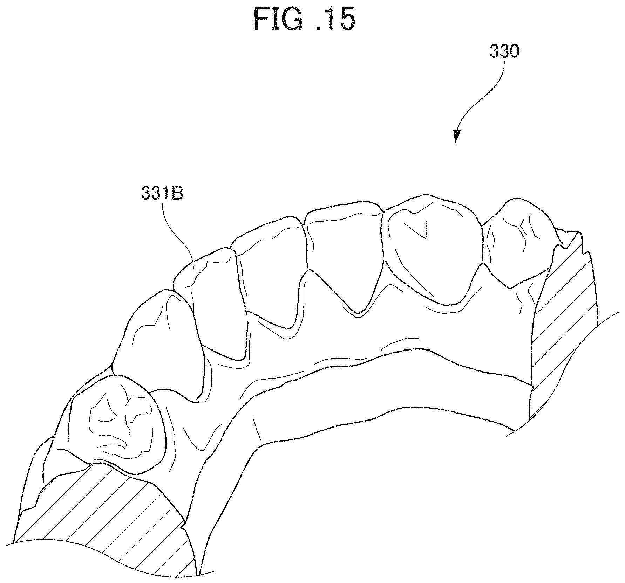

FIG. 14 is a diagram illustrating pre-restoration dentition 330A to be restored using the dental treatment index 310 and the index fixing holder 320 of the fourth embodiment. FIG. 15 is a diagram illustrating restored dentition 330B restored using the dental treatment index 310 and the index fixing holder 320 of the fourth embodiment. The pre-restoration dentition is denoted by 330A, and the restored dentition is denoted by 330B. However, when distinction is unnecessary, both are collectively referred to as dentition 330.

In the first embodiment, the dental crown 31 to be restored is a molar, so that the dentition 30 including the dental crown 31 is not significantly curved in the horizontal direction (direction orthogonal to the vertical direction). However, in the fourth embodiment, as illustrated, since the dentition 330 to be restored includes anterior teeth, the dentition is curved more significantly than in the first embodiment.

Therefore, the dental treatment index 310 and the index fixing holder 320 of the fourth embodiment are curved in the horizontal direction in accordance with the curvature of the dentition 330, more than in the first embodiment. In the fourth embodiment, the guide portion 313a is an entire fixing outer surface 313 of two index side portions 312. However, the configuration is not limited thereto, and the guide portion 313a may protrude outward as in the case of the first embodiment. The guide portion 313a and the counter guide portion 323 are not flat surfaces, but are curved in accordance with the curvature of the dentition 330 in a cross section extending in the horizontal direction.

In the fourth embodiment, a positioning convex portion 318 is further provided at a lower central portion of the guide portion 313a of the dental treatment index 310. The positioning convex portion 318 protrudes in a wedge shape at a corner between the guide portion 313a and a contact portion 315.

A positioning concave portion 328 is provided at a position of the counter guide portion 323 of the index fixing holder 320 corresponding to the positioning convex portion 318. The positioning concave portion 328 is cut upward from a bottom surface, which is a counter contact portion 125 of the counter guide portion 323, and is a portion with which the positioning convex portion 318 engages.

Other portions are substantially the same as those of the first embodiment, and therefore descriptions of the same portions are omitted. The fourth embodiment can achieve the same effects as in the first embodiment, and can further achieve the following effects. The positioning convex portion 318 and the positioning concave portion 328 are not essential and may be omitted.

The dentition 330 is not curved with a constant curvature. The side closer to the anterior teeth is more curved than the side closer to the molars. Accordingly, the guide portion 313a and the counter guide portion 323 are also, like the dentition 330, more curved on the side closer to the anterior teeth, while the curvature on the molar side is smaller than on the anterior side. That is, the degree of curvature is not constant. Therefore, when the horizontal positions of the guide portion 313a and the counter guide portion 323 are displaced, it becomes difficult for the counter guide portion 323 to uniformly press the guide portion 313a.

However, in the present embodiment, the positioning convex portion 318 is provided at the lower central portion of the guide portion 313a, and the positioning concave portion 328 is provided at a position corresponding to the positioning convex portion 318 in the lower central portion of the counter guide portion 323. When the counter guide portion 323 is slid along the guide portion 313a to engage the positioning concave portion 328 with the positioning convex portion 318, the counter guide portion 323 is positioned relative to the guide portion 313a and held at a predetermined position. As a result, the counter guide portion 323 can uniformly press the entire guide portion 313a.

If the guide portion 313a and the counter guide portion 323 were flat, unlike in the embodiment, the size of the dental treatment index 310 and the index fixing holder 320 in the fourth embodiment would become larger. However, in the embodiment, the guide portion 313a and the counter guide portion 323 are curved in accordance with the curvature of the dentition 330. Therefore, the dental treatment index 310 and the index fixing holder 320 can be made compact in size.

### (Fifth Embodiment)

In the first embodiment, one type of dental treatment index 10 is used to form a target tooth shape. However, the present invention is not limited thereto, and the dental crown 31 or the dentition 30 may be formed into a final target tooth shape by using two or more types of dental treatment indexes.

In the fifth embodiment, a first dental treatment index 10A and a second dental treatment index 10B are provided as dental treatment indexes. With the first dental treatment index 10A, a pre-restoration tooth shape is first formed into an intermediate target tooth shape 31Ba that is slightly smaller than a final target tooth shape. Then, the intermediate target tooth shape is formed into the final target tooth shape using the second dental treatment index 10B.

### (First Dental Treatment Index 10A)

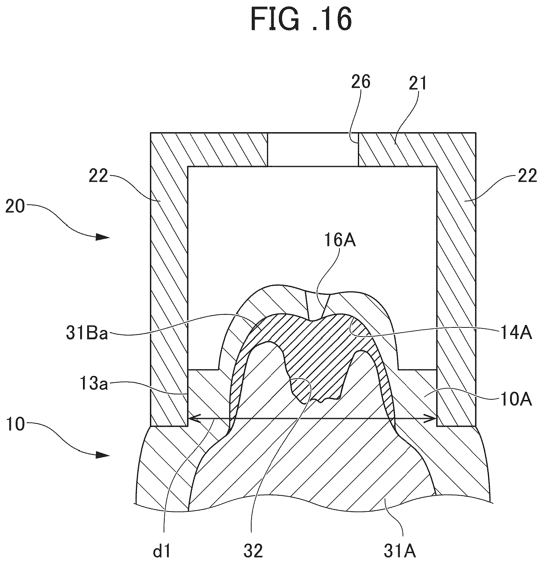

FIG. 16 is a diagram illustrating a method of forming an intermediate target tooth shape using the first dental treatment index 10A in the fifth embodiment. A tooth-shaped hole 14A of the first dental treatment index 10A corresponds to the intermediate target tooth shape 31Ba, which is slightly smaller than the final target tooth shape of the dental crown 31 or dentition 30 to be finally formed. Descriptions other than the tooth-shaped hole 14A are the same as those of the dental treatment index 10 and therefore omitted.

As in the first embodiment, the first dental treatment index 10A is placed over a pre-restoration dental crown 31A, and uncured light-curable resin is injected from the through-hole 16 into a gap between the pre-restoration dental crown 31A and an inner surface of the tooth-shaped hole 14A of the first dental treatment index 10A, thereby filling the gap with the uncured light-curable resin.

Alternatively, as in the second embodiment, before the first dental treatment index 10A is placed over the pre-restoration dental crown 31A, light-curable resin is arranged in the tooth-shaped hole 14A. Then, the first dental treatment index 10A is placed over the pre-restoration dental crown 31A.

Here, when using the first dental treatment index 10A, it is preferable that the light-curable resin be a 3D printable composite resin having the same color and quality as natural dentin.

Next, in a state where index side portions 12 of the first dental treatment index 10A are interposed between the holder side portions 22 of the dental treatment index fixing holder 20, the dental treatment index fixing holder 20 is slid downward.

Then, light is irradiated to the light-curable resin filled between the dental crown 31A and the first dental treatment index 10A from outside the dental treatment index fixing holder 20. Next, the dental treatment index fixing holder 20 is removed from the first dental treatment index 10A. Through the above steps, the dental crown 31A is restored into the intermediate target tooth shape 31Ba.

### (Second Dental Treatment Index 10B)

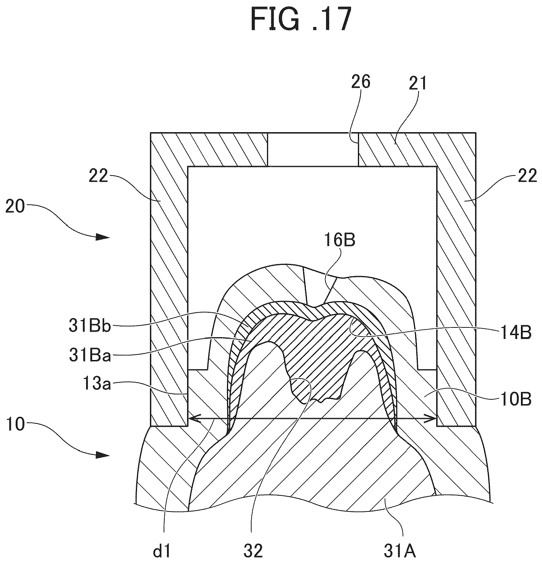

FIG. 17 is a diagram illustrating a method of forming a final target tooth shape using a second dental treatment index 10B in the fifth embodiment. A tooth-shaped hole 14B of the second dental treatment index 10B corresponds to a final target tooth shape 31Bb, which is a dental crown 31 or a dentition 30 to be finally formed. Descriptions other than the tooth-shaped hole 14B are the same as those of the dental treatment index 10 and therefore omitted.

As in the first embodiment, the second dental treatment index 10B is placed over a dental crown restored into the intermediate target tooth shape 31Ba, and uncured light-curable resin is injected from the through-hole 16 into a gap between the pre-restoration dental crown 31A and an inner surface 11a of the tooth-shaped hole 14B of the second dental treatment index 10B, thereby filling the gap with the uncured light-curable resin.

Alternatively, as in the second embodiment, before the second dental treatment index 10B is placed, light-curable resin is arranged in the tooth-shaped hole 14B, and then the second dental treatment index 10B is placed over the intermediate target tooth shape 31Ba.

Here, it is preferable that the light-curable resin be a 3D printable composite resin having the same color and quality as natural enamel.

Next, in a state where index side portions 12 of the second dental treatment index 10B are interposed between holder side portions 22 of the dental treatment index fixing holder 20, the dental treatment index fixing holder 20 is slid downward.

Then, light is irradiated to the light-curable resin filled in a gap formed between the intermediate target tooth shape 31Ba and the second dental treatment index 10B, from outside the dental treatment index fixing holder 20. Next, the dental treatment index fixing holder 20 is removed from the second dental treatment index 10B. Through the above steps, the intermediate target tooth shape 31Ba is restored into the final target tooth shape 31Bb.

In the first dental treatment index 10A and the second dental treatment index 10B, the distance between the two guide portions 13a is substantially constant as d1. Accordingly, a common dental treatment index fixing holder 20 in which the distance between the counter guide portions 23a is d2 can be used.

As described above, according to the present embodiment, the dental crown 31A restored to the final target tooth shape 31Bb has a two-layer structure in which an inside corresponds to dentin and an outside corresponds to enamel. According to the present embodiment, not only is the dental crown 31A restored, but also a restored dental crown having an appearance closer to an actual dental crown and excellent aesthetics can be provided.

While preferred embodiments of the present invention have been described above, the present invention is not limited thereto and various modifications are possible.

For example, in the fifth embodiment, the first dental treatment index 10A is used to first form a pre-restoration tooth shape into an intermediate target tooth shape slightly smaller than the final target tooth shape, and then the second dental treatment index 10B is used to form the intermediate target tooth shape into the final target tooth shape. However, the present invention is not limited thereto, and the final target tooth shape may be formed by using two or more dental treatment indexes. For instance, with the first dental treatment index 10A, the pre-restoration tooth shape may be partially restored into an intermediate target tooth shape, and then with the second dental treatment index 10B, the remaining portion of the pre-restoration tooth shape may be restored into the final target tooth shape.

### EXPLANATION OF REFERENCE NUMERALS

- 1:: dental treatment set
- 10:: dental treatment index
- 11:: index connecting portion
- 11a:: inner surface
- 11b:: upper surface
- 12:: index side portion
- 13:: fixing outer surface
- 13a:: guide portion
- 13b:: fixing outer surface upper portion
- 14:: tooth-shaped hole
- 15:: contact portion
- 16:: through-hole
- 20:: dental treatment index fixing holder
- 21:: holder connecting portion
- 22:: holder side portion
- 23:: fixing inner surface
- 23a:: counter guide portion
- 23b:: fixing inner surface upper portion
- 25:: counter contact portion
- 26:: opening
- 30:: dentition

## Claims

1. A dental treatment index composed of a light-transmissive material, the dental treatment index comprising:
two fixing outer surfaces; and
a tooth-shaped hole provided in an inner surface between the two fixing outer surfaces,
wherein guide portions are provided on the fixing outer surfaces, respectively.

2. The dental treatment index according to claim 1, wherein each of the guide portions is a flat surface.

3. The dental treatment index according to claim 1, wherein a portion where the tooth-shaped hole is provided includes a through-hole penetrating the inner surface and an upper surface.

4. The dental treatment index according to claim 3, wherein the through-hole has an opening area that decreases from the upper surface toward the inner surface.

5. The dental treatment index according to claim 1, wherein a contact portion extending outward is provided from a tip end of the guide portions in a direction from the upper surface toward the inner surface.

6. The dental treatment index according to claim 1, wherein each of the guide portions is provided on a tip end side in a direction from the upper surface toward the inner surface in the fixing outer surface.

7. A dental treatment index fixing holder composed of a light-transmissive material, the dental treatment index comprising:
two holder side portions connected to each other,
wherein counter guide portions are provided on fixing inner surfaces of the two holder side portions, the fixing inner surfaces facing each other.

8. The dental treatment index fixing holder according to claim 7, wherein each of the counter guide portions is a flat surface.

9. A dental treatment set, comprising:
the dental treatment index according to claim 1; and
the dental treatment index fixing holder according to claim 7,
wherein, when a distance between fixing inner surface upper portions other than portions where the counter guide portions are provided on the two fixing inner surfaces of the dental treatment index fixing holder is defined as d4, and a distance between fixing outer surface upper portions other than portions where the guide portions are provided on the two fixing outer surfaces of the dental treatment index is defined as d3, the relationship is d3 < d4.

10. The dental treatment set according to claim 9, wherein, when a distance between the two counter guide portions is defined as d2, and a distance between the two guide portions is defined as d1, the relationship is d2 ≤ d1.

11. A dental treatment index three-dimensional data generation method, comprising:
a pre-restoration tooth shape imaging step of capturing a pre-restoration tooth shape image;
a pre-restoration tooth shape three-dimensional data generation step of creating pre-restoration tooth shape three-dimensional data based on the pre-restoration tooth shape image;
a target tooth shape three-dimensional data generation step of creating target tooth shape three-dimensional data of a target shape to be formed after restoration, based on the pre-restoration tooth shape three-dimensional data; and
a dental treatment index three-dimensional data generation step of creating three-dimensional data of a dental treatment index, the dental treatment index including two fixing outer surfaces, guide portions provided on the respective fixing outer surfaces, and a tooth-shaped hole corresponding to the target tooth shape formed in an inner surface between the two fixing outer surfaces, based on the target tooth shape three-dimensional data.

12. Dental treatment index creation data configured to be input to a 3D printer to create a dental treatment index, the dental treatment index comprising:
two fixing outer surfaces;
guide portions provided on the respective fixing outer surfaces; and
a tooth-shaped hole corresponding to a target tooth shape of a target shape to be formed after restoration, the tooth-shaped hole being formed in an inner surface between the two fixing outer surfaces.
